Europäisches Patentamt

European Patent Office

Office européen des brevets

(19)

(11) Publication number: **0 062 247**
**B1**

(12) **EUROPEAN PATENT SPECIFICATION**

(45) Date of publication of patent specification: **27.03.85**

(21) Application number: **82102493.2**

(22) Date of filing: **25.03.82**

(51) Int. Cl.⁴: **F 16 H 3/10**

(54) **Manually operated mechanical transaxle transmission for motorvehicles.**

(30) Priority: **02.04.81 IT 6745881**

(43) Date of publication of application:
**13.10.82 Bulletin 82/41**

(45) Publication of the grant of the patent:
**27.03.85 Bulletin 85/13**

(84) Designated Contracting States:
**DE FR GB SE**

(56) References cited:
**DE-C- 864 514**
**FR-A- 724 450**
**FR-A- 950 121**
**FR-A- 1 026 844**
**US-A- 1 958 607**
**US-A- 4 033 200**

(73) Proprietor: **CORINT S.r.l.**
**Strada degli Alberoni 18/2**
**I-10133 Torino (IT)**

(72) Inventor: **Cordiano, Ettore**
**Strada degli Alberoni 18/2**
**I - 10133 Torino (IT)**

(74) Representative: **Jacobacci, Filippo et al**
**c/o JACOBACCI-CASETTA & PERANI S.n.c. Via**
**Alfieri, 17**
**I-10121 Torino (IT)**

EP 0 062 247 B1

Courier Press, Leamington Spa, England.

## Description

The present invention relates to a manually operated mechanical transaxle transmission for motorvehicles with n forwards speeds plus one reverse speed, of the kind comprising:

An input shaft driven by the engine,

At least one output shaft with an output gear driving a differential ring gear,

A series of n-1 pairs of gears on the shafts that realize the ratios of the various normal forward speeds (underdrive and direct drive), one gear of each pair being permanently connected to its own shaft, while the other gear is free on its relevant shaft to which it can be connected by means of suitable engagement devices with synchronizers,

A $n^{th}$ pair of overdrive gears, one of them being fixed on its own shaft, while the other is free on the other shaft to which it can be connected by means of a clutch,

A free-wheel interposed between one gear of the immediately lower $(n-1)^{th}$ speed and the relevant shaft, in such a way that the driving action takes place only in one direction of rotation direction.

A further set of gears for the reverse speed, and

A transmission case formed by one or more elements and covers, which contains and journals said shafts and said differential ring gear, through bearings, whereby the overdrive $n^{th}$ ratio can be engaged when the immediately lower $(n-1)^{th}$ ratio is engaged, without the necessity of its shifting out, only by engaging the clutch mounted on the overdrive gear, and whereby the overdrive gears are mounted on the ends of their associated shafts, on the side opposite to that of connection to the engine crankshaft. A transaxle transmission of this kind is known from US—A—4.033.200.

It is well known that one of the means to reduce the fuel consumption of a motorvehicle is to make as high as possible the transmission ratios between engine and wheels. This way the engine is used at lower rpm and closer to full throttle conditions, hence with a better efficiency.

Unfortunately, on the other side, high ratios involve low car accelerations, thus the utmost care must be taken in choosing the ratios according to car characterization.

To obtain a good compromise between performances and fuel economy, a practical solution is the addition to a normal 3 or 4 speed gearbox of a supplementary 4th or 5th overdrive gear, whose ratio is such that, when it is in, the vehicle does not reach its maximum speed. If this overdrive is wisely used, particularly in city traffic, it permits to attain consistent fuel economies. But, if the ratio is too high, every time the driver has to accelerate, or overtake, or climb an even light slope, he must shift into the lower gear and to shift again into overdrive after the emergency situation ceases.

If these manoeuvres are too frequent, as it normally happens in city traffic, they become annoying for the driver and he renounces to the overdrive and uses it only on the motorways.

A conventional overdrive of known type, with epicyclic gear train, wet disc clutches, oil pump, would solve the problem, because it is capable to engage the overdrive when the driver does not need strong traction efforts and to shift to normal top gear when these efforts are required. Unfortunately the presently known overdrives are rather complicate, heavy and expensive and furthermore they waste a good deal of the spared fuel in order to drive the oil pump.

Other systems have been studied with the object of obtaining an economic overdrive without epicyclic gears, which use also free-wheels to simplify the in-and-out shifting device of the overdrive ratio.

The following solutions can be mentioned, covered by the relevant patents, with the advantages and disadvantages associated with each of them:

FR—A—724.450, relating to a gearbox for rear wheel drive (R.W.D.) vehicle wherein between the output shaft and the propeller-shaft a free-wheel is interposed which permits to shift all speeds without disengaging the engine friction clutch, by utilizing the principle that, when the engine slows-down, the driving action on the propeller-shaft is interrupted. A claw clutch means is provided to lock up the free-wheel in order to utilize the braking action of the engine when necessary.

Said device does not answer to the objects of the present invention, it compels the driver to operate the shift lever for engaging the overdrive, in this case direct drive, and to release the accelerator pedal for the same operation, it does not permit to power-shift the overdrive and has all known disadvantages of the gears clutches without synchronizers.

DE—C—864.514, relating to a gearbox for R.W.D. vehicles comprising an input shaft, an intermediate shaft and an output shaft, with two pre-reduction pairs of gears between input shaft and intermediate shaft, a pair of which having a gear mounted on its associated shaft through a free-wheel and the other gear fixed on its shaft, and the other pair having a gear fixed on the intermediate shaft and the other gear free on the input shaft to which it can be made fast by means of a wet disc clutch. The object of the device is to shift from a pair of gears to the other, hence from a set of ratios to an other, by only operating said clutch.

This device is not applicable to a transaxle transmission with only two shafts and does not permit the use of a source of pressure oil external to the transmission to operate the clutch. The wet disc clutch, in fact, is rotating with the input shaft and it requires a rotating seal on the same shaft for supplying pressure oil to the clutch cylinder. Said rotating seal can not be absolutely tight and, consequently, the same lubricating oil of the transmission must be used for the control of the clutch and hence a specific pump is required for pressurizing it.

FR—A—950.121, relating to a transmission of the same kind of DE—C—864.514 previously described, with a slightly different embodiment kind, and with the addition of a device for automatically engaging another gear when the gear with the free-wheel is rotating faster than its associated shaft, so as to enable the use of the engine braking action. The same observations can be made as for the mentioned Patentschrift.

US—A—958.607, relating to a three-shafts transmission for R.W.D. vehicles, with a rather complex mechanism of coaxial shafts, gears and claw clutches designed in such a way as to simplify the operation of the shift lever. It is completely different from the transmission of the present invention, even it contains already the principle of the free-wheel.

US—A—4.033.200, (already mentioned above) relating to a transaxle transmission with an input shaft and a pair of counter-shafts to reduce transmission axial dimensions, having one of the fourth speed gears provided with a free-wheel and a fifth overdrive speed, a gear of which can be made fast on its countershaft through synchronizer clutch means, without disengaging fourth gear. It differs from the present invention inasmuch it has 3 shafts, instead of 2, and has synchronizer instead of friction clutch for engaging the overdrive. It has the disadvantages of requiring the interruption of torque in order to engage the overdrive and, even by interrupting the torque, of stressing to an unacceptable extent the synchronizer means because of the big inertia of the engine to be synchronized.

EP—A—0 025 823, relating to a transmission having a hydraulically actuated clutch operated by a stationary piston *via* a thrust bearing. This transmission is, however, completely different from the present invention.

It is the object of this invention to realize an overdrive for a manually operated transmission which can be shifted in or out automatically or with a simple manoeuvre by the driver without disengaging the engine friction clutch, with a low cost and a good efficiency.

This result is obtained according to the invention in that the clutch is of the wet disc friction type, whereby the wet discs of the clutch are pressed against each other, through a thrust bearing coaxial with the shaft of the clutch, by a non-rotating piston sliding in a cylinder, non-rotating itself and coaxial with the shaft of the clutch, the cylinder being formed on a cover of the transmission case on the side opposite to that of power input, and in that the overdrive gears and the output gear, when this output gear is mounted on the same shaft as the clutch, are of the spiral gear type, the angle of the spiral teeth being chosen in such a way as to generate, under torque, a resulting axial load on the shaft, which contrasts the load transmitted to the same shaft by the piston through the thrust bearing.

According to a further development of the invention, pressure oil to the clutch control cylinder is fed from the engine lubrication circuit and, when the cylinder is not under pressure, it is connected to the engine crankcase in order to utilize the therein existing vacuum to exert a return action on the piston and move the thrust bearing away from the opposite rotating surface.

In this manner an overdrive is obtained which can be realized through a rather simple conversion of a transmission of currently used kind, with a cost only slightly higher than that of a normal transmission with the same number of speeds, and without the power waste due to the specific oil pump of a conventional overdrive.

The invention will now be described, by way of non-limitative example, with reference to the accompanying drawings, among which:

Fig. 1 illustrates schematically the section of a transversely mounted 5 speeds transmission according to the invention,

Fig. 2 shows the detail of fourth gears and of the overdrive,

Fig. 3 indicates one of the possible control circuits of the transmission,

Figs. 4 and 5 show a sliding valve operated by the selector rod of the transmission in two different positions,

Fig. 6 shows a valve operated by the accelerator pedal, and fig. 7 the same valve with the addition of a device to exclude manually its operation.

Fig. 8 indicates an other layout of gearbox control with an electrovalve.

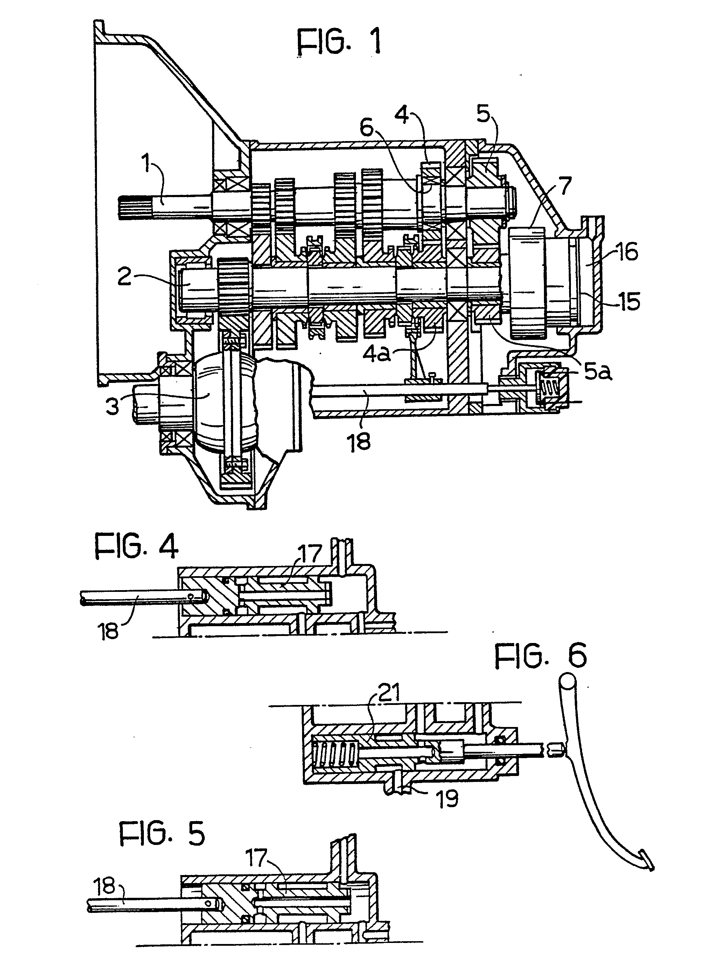

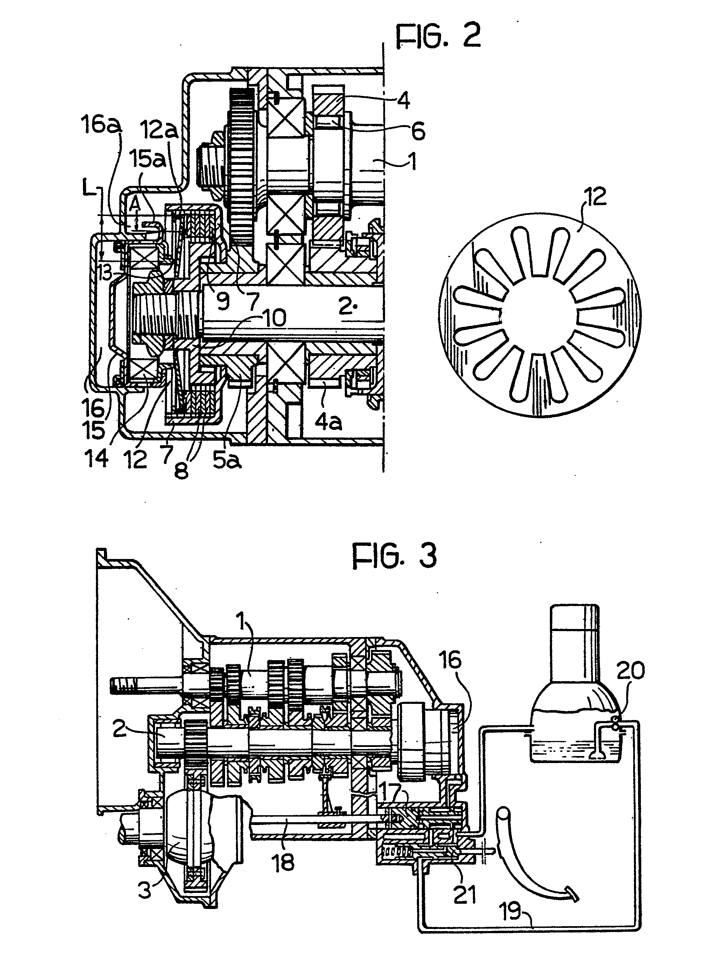

In figs. 1, 2 reference numerals 1 and 2 indicate the input and the output shaft and 3 the differential case. Driving gear 4 of fourth speed is driven by the primary shaft through free-wheel 6 and it drives gear $4_a$ that is made fast to the countershaft 2 by means of its conventional engagement device. Freewheel 6 is so designed to lock up when the primary shaft tends to rotate faster than gear 4. Overdrive gear 5, in this case fifth speed gear, drives gear $5_a$, which is mounted free on the countershaft 2 and can be made fast to it by means of a wet disc clutch.

This clutch is formed by a bell 7, internally toothed and integral with gear $5_a$, said bell driving through its internal toothing a set of axially sliding friction discs 8. These discs rotate between other discs 9, that are axially sliding too, and are rotationally engaged with toothed hub 10, fixed to countershaft 2.

Discs 9 are lined with friction material of the kind normally used for the conventional automatic transmission brakes and clutches.

Disc spring 12, which, through push-ring 13 and thrust bearing 14, is loaded by piston 15 on which the oil pressure in cylinder 16 acts, pushes disc 11. Piston 15 has one or more external lugs $15_a$ that engage with ribs $16_a$ or other fixed abutments on the transmission case, in order to prevent it from rotation.

Disc 11 can be suitably connected to the disc spring so that, when the spring returns to the rest position, it pulls back the disc 11 and moves it away from adjacent disc 9.

Disc spring 12 reacts against external support ring $12_a$ and transmits to disc 11 a load roughly equal to piston 15 thrust effort multiplied by the

arms ratio L/A. Under the spring load, disc 11 keeps discs 8 and 9 pressed against each other and against the bottom surface of bell 7, and thus the clutch is capable of transmitting a torque which is proportional to the spring load, to the number and mean diameter of the friction surfaces and to the friction coefficient.

The same engine lubrication sump is used to feed oil under pressure, as its mass-flow is much higher in comparison with the one absorbed by cylinder 16. Obviously the oil discharged from the cylinder when the clutch is disengaged, is sent back into the oil sump. This way a further advantage is obtained: when the cylinder is discharged and hence connected to the oil sump, it is at the same vacuum existing in the engine crankcase and required by the anti-pollution laws. A recall action is therefore exerted on piston 15, which assures the complete clutch disengagement and the separation of spring 12 from thrust ring 13. Thus the bearing is rotating only if the overdrive is shifted in; in all other gears it is stationary and loadless.

System operates as follows.

When the fourth speed is engaged through its conventional synchronization device, and the overdrive is disengaged, the countershaft is driven by gear $4_a$ through driving gear 4 and free-wheel 6. If pressure oil is sent into cylinder 16, the clutch is engaged and gear $5_a$ is made fast with shaft 2. Under such conditions, since the $4^{th}$ gear ratio is lower than the $5^{th}$ gear, gear 4 rotates faster than shaft 1, this being permitted by the free-wheel. The drive between input and output shaft takes place through gears 5 and $5_a$, that is in overdrive.

By eliminating the pressure in cylinder 16, the clutch is disengaged, the input shaft accelerates up to the speed of gear 4 and from this instant shaft 1 drives gear 4. The transmission is again in fourth gear.

Different modes are possible to control the clutch, that is the oil flow in or from cylinder 16. They all must, first of all, guarantee the condition that the overdrive and the relevant clutch can be engaged only when the transmission is in fourth gear and never in the other speeds.

A very simple and efficient type of control could correspond to the following logic, according to the layout of fig. 3. The accelerator pedal has a kick-down (K.D.) stroke during which the engine full charge is maintained and a valve is operated in order to discharge cylinder 16. When the fourth gear is engaged, if the pedal is not in K.D. pressure oil arrives to the cylinder and the overdrive is automatically thrown in. By depressing the pedal in K.D., the pressure is eliminated, the overdrive is thrown out and the fourth gear in engaged.

If the driver sets the shift lever into fourth gear position, the fourth gear is engaged but, through the free-wheel and the clutch, the transmission works in overdrive. But when the driver goes to K.D., the transmission shifts automatically in fourth speed and remains there till K.D. is maintained. By releasing the K.D., the fifth speed is engaged again automatically.

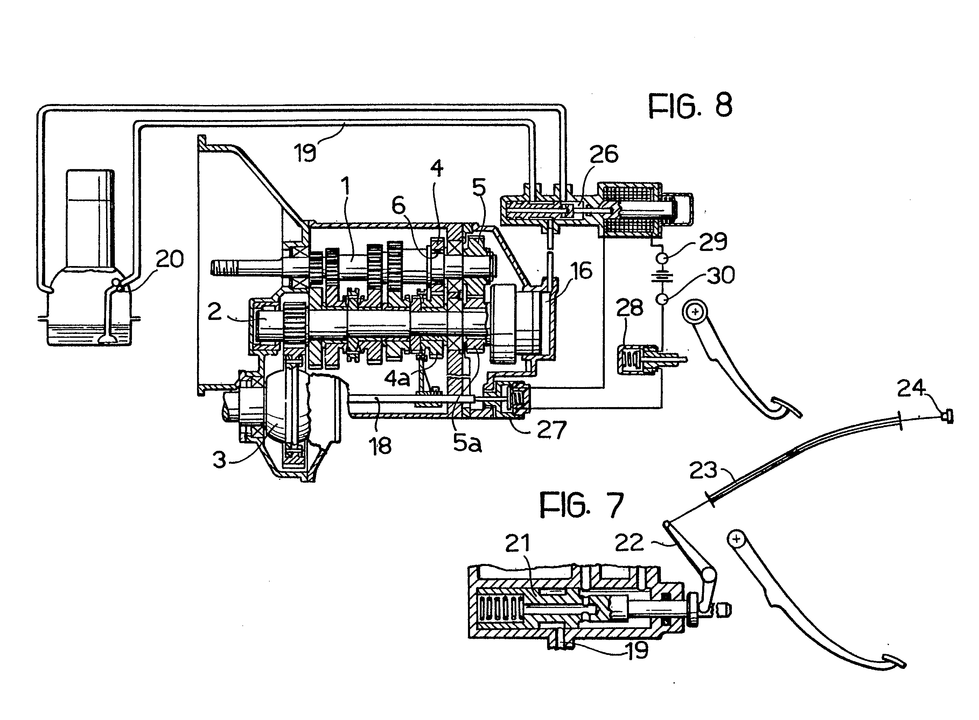

In layout fig. 3 the three-way sliding valve 17 is operated by the selector rod which engages the fourth and the third gear. The valve is so designed that, when the fourth is in, as it is indicated in the same figure, cylinder 16 is connected to duct 19, bringing the oil from the engine pump 20 while, when the selector is in the position of third gear, as in fig. 4, or of neutral or other gears, as in fig. 5, cylinder 16 is connected with the sump.

On duct 19, between valve 17 and pump 20, a second valve is inserted, which connects the same valve 17 either with the pump or with the engine crankcase. Valve 21 is linked to the accelerator pedal in such a way that, when the pedal is in K.D., as indicated in fig. 6, valve 17 is connected to the crankcase while, when the pedal is not in K.D., as in fig. 3, valve 17 is in communication with the oil pump.

System operates as follows.

When the fourth gear is engaged, valve 17 enables oil to arrive from the pump to the cylinder. The actual arrival of oil is controlled by valve 21, that is by the accelerator position. If accelerator is in K.D., the oil is intercepted and cylinder 16 is connected to the crankcase, conversely, if the pedal is not in K.D., oil arrives at the cylinder and causes the engagement of the fifth speed. On the contrary, if the fourth speed is not engaged, valve 17 cuts off oil arrival and connects the cylinder to the crankcase. Thus the oil cannot arrive, whatever the accelerator pedal position.

The system can be completed with a manually operated device, of the type indicated, by way of example, in fig. 7, through which the driver can maintain valve 21 in stationary discharge position, in order to prevent fifth gear shifting in, for whatever accelerator position. With reference to fig. 7, lever 22, operated by knob 24 through flexible control 23, pushes slide valve 21 to stroke end as it happens in K.D., connecting the cylinder to the crankcase and cutting off oil arrival.

Similarly, if deemed necessary, another device can be foreseen, which feels engine r.p.m. and prevents fifth gear engagement under a given r.p.m. value, or feels the vehicle speed and prevents the engagement under a given speed.

Obviously the same type of operation can be obtained with electromagnetic rather than mechanical valves. Fig. 8 shows a feasible realization scheme. In the hydraulic circuit only one three-way valve 26 exists, whose electric circuit is closed by the in series switches 27 and 28. Switch 27 is operated by the fourth gear selector rod and is on only if said gear is engaged. Switch 28 is linked to the accelerator pedal and is off only when this is in K.D., With this arrangement the oil under pressure arrives at the cylinder 16 only if the fourth gear is engaged and the accelerator is not in K.D., If one of these conditions is not met, cylinder 16 is by-passed to oil sump.

In addition, with such system devices can be provided in order to prevent overdrive shifting in at drivers will or below a certain engine r.p.m. or a certain vehicle speed. In layout fig. 8 these functions are performed by switch 29 operated by the driver and by device 30 which opens the electrical circuit below a prefixed value of engine r.p.m. or vehicle speed.

A different type of control logic can be envisaged, for example leaving to the driver the decision to shift in the fourth or fifth speed, without doing anything else but operating the accelerator pedal. It could be decided, for instance, that, when the pedal is depressed in K.D., the fourth speed is in and remains engaged even if the pedal is released, but not completely. Shifting into fifth speed would occur only when the pedal is completely released and the fifth speed would remain engaged until the K.D. is reached. This result can be easily obtained by modifying the electrical control circuit of fig. 7 by adding a suitable self-energizing remote control switch for closing the internal circuit of the electrovalve and another switch on the accelerator pedal which is on with released pedal, or by adopting a suitable, simple electronic control circuit.

The same could be made with a mechanical control system but it would become rather complicated.

In regard of a system operated as described above, the following two objections could be raised: the first one is that, when the overdrive is in, the bearing which anchors axially the output shaft is loaded also with the thrust of piston 15 and, hence, more severely stressed.

Practically this problem does not exist because: first of all, through arms ratio L/A, for a given thrust load necessary to transmit the torque, the thrust of the piston can be sensibly reduced.

Secondarily, the spiral angles of the teeth of gear $5_a$ and of differential pinion can be chosen in such a way that their resulting axial load on the shaft is approximately equal and opposite to the piston thrust, and consequently that the residual axial load on the bearing is practically zero.

The second objection is that, when the fourth gear is working, because of the free-wheel the braking action of the engine cannot be utilized. As a matter of fact, when the pedal is completely released to brake, whatever the adopted control logic, the overdrive is always engaged through its clutch and therefore there is always the engine braking action, even if slightly smaller, being the ratio higher than in fourth speed.

But in those conditions when a strong engine braking action is required, when set in lower gears, the transmission behaves like a normal one without automatic overdrive.

Layout relates, as already said, to a 5 speeds transmission for vehicles with a transversally mounted engine. Obviously all the preceding considerations are valid also for a transmission originally with three speeds, to which a fourth, automatic overdrive is added and the system can be applied also to longitudinal transaxles both for front wheel drive (FWD) and RWD vehicles.

It should be noted that the synchronizers for the gear engagement are not indicated in the layouts. It is evident however from the preceding description that, whatever the kind of synchronizers adopted, they do not influence at all the system operation.

## Claims

1. Manually operated mechanical transaxle transmission for motorvehicles with n forward speeds plus one reverse speed, of the type comprising:

An input shaft (1) driven by the engine,

At least one output shaft (2) with an output gear driving a differential ring gear,

A series of n-1 pairs of gears on the shafts (1, 2) that realize the ratios of the various normal forward speeds (underdrive and direct drive), one gear of each pair being permanently connected to its own shaft (1), while the other gear is free of its relevant shaft (2) to which it can be connected by means of suitable engagement devices with synchronizers,

A $n^{th}$ pair of overdrive gears (5, 5a), one of them (5) being fixed on its own shaft (1), while the other is free on the other shaft (2) to which it can be connected by means of a clutch,

A freewheel (6) interposed between one gear (4) of the immediately lower $(n-1)^{th}$ speed and the relevant shaft (1), in such a way that the driving action takes place only in one direction of rotation,

A further set of gears for the reverse speed,

A transmission case formed by one or more elements and covers, which contains and journals said shafts and said differential ring gear through bearings, whereby the overdrive $n^{th}$ ratio can be engaged when the immediately lower $(n-1)^{th}$ ratio is engaged, without the necessity of its shifting out, only by engaging the clutch mounted on the overdrive gear, and whereby the overdrive gears (5, 5a) are mounted on the ends of their associated shafts (1, 2), on the side opposite to that of connection to the engine crankshaft, characterized in that the clutch is of the wet disc friction type, whereby the wet discs (8, 9) of the clutch are pressed against each other through a thrust bearing (14) coaxial with the shaft of the clutch, by a non-rotating piston (15) sliding in a cylinder (16) non-rotating itself and coaxial with the shaft of the clutch, the cylinder (16) being formed on a cover of the transmission case on the side opposite to that of power input, and in that the overdrive gears (5, 5a) and the output gear, when this output gear is mounted on the same shaft (2) as the clutch, are of the spiral gear type, the angle of the spiral teeth being chosen in such a way as to generate, under torque, a resulting axial load on the shaft, which contrasts the load transmitted to the same shaft by the piston through the thrust bearing.

2. Manually operated transaxle transmission as in claim 1, wherein pressure oil to the clutch control cylinder (16) is fed from the engine lubrication circuit, and when the cylinder (16) is not under pressure it is connected to the engine crankcase in order to utilize the therein existing vacuum to exert a return action on the piston (15) and move the thrust bearing (14) away from the opposite rotating surface.

3. Manually operated transaxle transmission as in claim 1 or 2 wherein the piston thrust is transmitted to the clutch discs (8, 9) through a disc spring (12), or equivalent device, which works like a lever, increasing the ratio between disc load and piston thrust so as to reduce the axial load on the axial bearing of the associated shaft.

4. Manually operated transaxle transmission as in any of claims from 1 to 3, having an overdrive control circuit which comprises two three-way valves (17, 21) of which, mechanically or through a suitable electrical circuit with switches and electromagnets, one is linked to the transmission manual control and the other to the accelerator pedal or to a suitable control device manually operated by the driver, the first (17) having the function of giving consent to oil arrival to the cylinder (16) only when the gear (4a) immediately below the overdrive is engaged and to connect the cylinder (16) to an oil sump when this gear is disengaged, and the second valve (21) having the function of connecting the first valve (17) to a pressurized oil source or to the oil sump, depending on the accelerator pedal position or the manual control device abovementioned.

5. Manually operated transaxle transmission as in any of claims from 1 to 3, having an overdrive control circuit which comprises one three-way valve (17), which connects the cylinder (16) to a pressurized oil source or to an oil sump, said valve (17) being arranged in such a way as to feel the engagement of the gear (4a) immediately below the overdrive and the accelerator pedal position or a manual control device operated by the driver.

**Patentansprüche**

1. Von Hand betätigbares mechanisches Transaxle-Getriebe für Motorfahrzeuge mit n Vorwärtsgängen und einem Rückwärtsgang, das folgende Bestandteile umfaßt: eine Eingangswelle (1), die vom Motor angetrieben wird, wenigstens eine Ausgangswelle (2) mit einem Ausgangs-Zahnrad, das ein Differential-Ring-Getrieberad antreibt, einer Serie von n-1 Zahnradpaaren auf den Wellen (1, 2), die die Übersetzungsverhältnisse der verschiedenen normalen Vorwärtsgänge (Untersetzung und Direktantrieb) realisieren, wobei ein Zahnrad eines jeden Paares ständig mit seiner zugehörigen Welle (1) verbunden ist, während das andere Zahnrad gegenüber seiner Welle (2) frei ist und mit dieser mit Hilfe von Synchronisatoren durch eine geeignete Eingriffsvorrichtung verbunden werden kann, ein n-tes Paar von Übersetzungs-Zahnrädern (5, 5a), von denen das eine (5) mit der zugehörigen Welle (1) fest verbunden ist, während das andere auf der anderen Welle (2) frei ist und mit dieser vermittels einer Kupplung verbunden werden kann, ein Freilaufrad (6), das zwischen dem einen Zahnrad (4) des unmittelbar niedrigern (n-1)-ten Ganges und der zugehörigen Welle (1) so angeordnet ist, daß eine Antriebswirkung nur in einer Drehrichtung erfolgt, einen weiteren Satz von Zahnrädern für den Rückwärtsgang und ein Getriebegehäuse, das von einem oder mehreren Elementen und Abdeckungen gebildet wird und das die Wellen und das Differential-Ring-Getrieberad enthält und mit Hilfe von Lagern drehbar lagert, wobei der n-te Übersetzungsgang auch dann, wenn der unmittelbar niedrigere (n-1)-te Gang eingelegt ist, lediglich dadurch eingelegt werden kann, daß die am Übersetzungs-Zahnrad montierte Kupplung in Eingriff gebracht wird, ohne daß der nächst niedrigere Gang ausgerückt werden muß, und wobei die Übersetzungs-Zahnräder (5, 5a) an den Enden ihrer zugehörigen Wellen (1, 2) auf der Seite montiert sind, die der Verbindung zur Motor-Kurbelwelle gegenüber liegt, dadurch gekennzeichnet, daß die Kupplung eine Naßscheiben-Reibungskupplung ist, wobei die nassen Scheiben (8, 9) der Kupplung vermitels eines zur Welle der Kupplung koaxialen Drucklagers (14) durch einen nicht rotierenden Kolben (15) gegeneinander gepreßt werden, die in einem selbst nicht rotierenden und zur Welle der Kupplung koaxialen Zylinder (16) gleitet, wobei der Zylinder (16) an einer Abdeckung des Getriebegehäuses an der Seite ausgebildet ist, die der Seite des Leistungseinganges gegenüberliegt, und daß die Übersetzungs-Zahnräder (5, 5a) und das Ausgangszahnrad dann, wenn dieses Ausgangszahnrad auf derselben Welle (2) wie die Kupplung montiert ist, spiralverzahnte Zahnräder sind, wobei der Winkel der Spiralzähne so gewählt ist, daß er bei Drehmomentbelastung eine resultierende Axialbelastung für die Welle erzeugt, die der Last entgegenwirkt, die auf diese Welle durch den Kolben über das Drucklager übertragen wird.

2. Von Hand betätigbares Transaxle-Getriebe nach Anspruch 1, dadurch gekennzeichnet, daß das unter Druck stehende Öl für den Kupplungs-Steuerzylinder (16) vom Motor-Schmierkreislauf her zugeführt wird und daß der Zylinder dann, wenn er nicht unter Druck steht, mit dem Motor-Kurbelwellen-Gehäuse verbunden ist, um den dort vorhandenen Unterdruck dazu zu verwenden, auf den Kolben (15) eine Rückholwirkung auszuüben und das Drucklager (14) von der gegenüberliegenden rotierenden Oberfläche wegzubewegen.

3. Von Hand betätigbares Transaxle-Getriebe nach Anspruch 1 oder 2, dadurch gekennzeichnet, daß der Kolbendruck auf die Kupplungsscheiben (8, 9) vermittels einer Scheibenfeder (12) oder einer äquivalenten Vorrichtung übertragen wird, die wie ein Hebel arbeitet und das Verhältnis zwischen der Scheibenbelastung und dem Kolbendruck vergrößert um so die Axialbelastung des Axiallagers der zugehörigen Welle zu vermindern.

4. Von Hand betätigbares Transaxle-Getriebe nach einem der Ansprüche 1 bis 3, dadurch gekennzeichnet, daß eine Übersetzungs-Steuerschaltung vorgesehen ist, die zwei 3-Wege-Ventile (17, 21) umfaßt, von denen das eine mechanisch oder über eine geeignete elektrische Schaltung mit Schaltern und Elektromagneten mit der Handbetätigungsvorrichtung für das Getriebe und das andere mit dem Gaspedal oder einer geeigneten, vom Fahrer von Hand zu betätigenden Steuervorrichtung verbunden ist und von denen das erste (17) die Funktion besitzt, daß es nur dann Öl zum Zylinder (16) gelangen läßt, wenn das zum Übersetzungsgang nächst niedrigere Zahnrad (4a) in Eingriff ist, und daß es den Zylinder (16) dann mit einer Ölwanne verbindet, wenn dieses Zahnrad ausgerückt ist, und von denen das zweite Ventil (21) die Funktion besitzt, das erste Ventil (17) in Abhängigkeit von der Stellung des Gaspedals oder der von Hand zu betätigenden Steuervorrichtung mit einer Quelle für unter Druck stehendes Öl oder mit der Ölwanne zu verbinden.

5. Von Hand betätigbares Transaxle-Getriebe nach einem der Ansprüche 1 bis 3, dadurch gekennzeichnet, daß eine Übersetzungs-Steuerschaltung vorgesehen ist, die ein 3-Wege-Ventil (17) umfaßt, das den Zylinder (16) mit einer Quelle für unter Druck stehendes Öl und einer Ölwanne verbindet, wobei das Ventil (17) so angeordnet ist, daß es das Einrücken des zum Übersetzungsgang nächst niedrigern Zahnrades (4a) und die Stellung des Gaspedals oder einer vom Fahrer von Hand betätigten Steuervorrichtung erfaßt.

## Revendications

1. Transmission mécanique à commande manuelle pour véhicules à moteur comprenant un nombre n de vitesses de marche avant plus une marche arrière, du type comprenant:

un arbre d'entrée (1) entraîné par le moteur;

au moins, un arbre de sortie (2) comportant un pignon de sortie entraînant la couronne d'un engrenage différentiel;

une série de n-1 paires de pignons sur les arbres (1, 2) qui réalisent les rapports des diverses vitesses de marche avant normales (sous-multipliée et prise directe), un pignon de chaque paire étant relié en permanence à son propre arbre (1), tandis que l'autre pignon est libre de l'arbre correspondant (2) auquel il peut être relié au moyen de dispositifs d'engagement appropriés comportant des synchroniseurs;

une $n^{ieme}$ paire de pignons de surmultiplication (5, 5a), dont l'un (5) est fixé sur son propre arbre (1), tandis que l'autre est libre sur l'autre arbre (2) auquel il peut être relié au moyen d'un accouplement;

une roue libre (6) interposée entre l'un des pignons (4) de la vitesse immédiatement inférieure $(n-1)^{ieme}$ et l'arbre correspondant (1), de telle façon que l'action d'entraînement n'a lieu que dans une seule direction de rotation;

une autre série de pignons pour la marche arrière;

un carter de transmission formé d'un ou de plusieurs éléments et de couvercles, qui contiennent et supportent à rotation lesdits arbres et ladite couronne de différentiel par des paliers, ce qui fait que le $n^{ieme}$ rapport de surmultiplication peut être engagé quand le rapport immédiat inférieur $(n-1)^{ieme}$ est engagé, sans qu'il soit nécessaire de le désengager, simplement en appliquant l'accouplement monté sur le pignon de surmultiplication, et de sorte que les pignons de surmultiplication (5, 5a) sont montés sur les extrémités des arbres correspondants (1, 2) sur le côté opposé à celui relié au vilbrequin du moteur, caractérisé en ce que l'accouplement est du type à friction à disque humide, ce qui fait que les disques humides (8, 9) de l'accouplement sont pressés les uns contre les autres par un palier de butée (14) coaxial à l'arbre de l'accouplement, par un piston non-rotatif (15) glissant dans un cylindre (16) lui-même non-rotatif et coaxial à l'arbre de l'accouplement, le cylindre (16) étant formé sur le couvercle du carter de transmission, du côté opposé à celui de l'entrée de l'énergie, et en ce que les pignons de surmultiplication (5, 5a) et le pignon de sortie, quand ce pignon de sortie est monté sur le même arbre (2) que l'accouplement, sont du type à denture hélicoïdale, l'angle de la denture hélicoïdale étant choisi de faç à développer, sous l'action d'un couple, un effort axial résultant sur l'arbre, qui contraste avec la force transmise à ce même arbre par le piston, par l'intermédiaire du palier de butée.

2. Transmission mécanique à commande manuelle selon la revendication 1, dans laquelle la pression de l'huile alimentant le cylindre de commande (16) de l'accouplement est fournie par un circuit de lubrification du moteur et quand le cylindre (16) n'est pas sous pression, il est relié au carter du moteur, afin d'utiliser le vide qui règne dans celui-ci pour exercer une action de retour sur le piston (15) et pour écarter le palier de butée (14) de la surface rotative opposée.

3. Transmission mécanique à commande manuelle selon la revendication 1 ou 2, dans laquelle la poussée du piston est transmise aux disques (8, 9) de l'accouplement par un ressort en forme de disque (12) ou par un dispositif équivalent, qui travaille comme un levier en augmentant le rapport entre le charge du disque et la poussée du piston, de manière à réduire l'effort axial s'exerçant sur le palier axial de l'arbre correspondant.

4. Transmission mécanique à commande manuelle selon l'une quelconque des revendications 1 à 3, comportant un circuit de commande de surmultiplication qui comprend deux valves à trois voies (17, 21) qui, mécaniquement ou par des circuits électriques appropriés avec des contacts et des électro-aimants, dont l'un est relié à la commande manuelle de la transmission et l'autre à la pédale d'accélérateur ou à un dispositif de commande approprié actionné manuellement par le conducteur, le premier (17) ayant pour fonction de ne consentir à l'arrivée de l'huile dans le cylindre que quand le pignon (4a) immédiatement au-dessous de la vitesse surmultipliée est engagé et à relier le cylindre (16) à un réservoir d'huile quand ce pignon est désengagé, tandis que la seconde valve (21) a pour fonction de relier la première valve (17) à une source d'huile sous pression ou au réservoir d'huile, selon la position de la pédale d'accélérateur ou du dispositif de commande manuel mentionné plus haut.

5. Transmission mécanique à commande manuelle selon l'une quelconque des revendications 1 à 3 comportant un circuit de commande de surmultiplication qui comprend une valve à trois voies (17) reliant le cylindre (16) à une source d'huile sous pression ou à un réservoir d'huile, ladite valve (17) étant montée de manière à percevoir ou à sentir que le pignon (4a) immédiatement au-dessous de la vitesse surmultipliée est engagé, et à percevoir également la position de la pédale d'accélérateur ou du dispositif de commande manuel actionné par le conducteur.

FIG. 1

FIG. 4

FIG. 6

FIG. 5

# FIG. 2

# FIG. 3

FIG. 8

FIG. 7